# EUROPEAN PATENT SPECIFICATION

(11) **EP 3 096 118 B1**
(45) Date of publication and mention of the grant of the patent: **09.01.2019**
(21) Application number: 14878725.2
(22) Date of filing: 21.01.2014
(51) Int. Cl.: G01K 19/00, G01K 17/10, F24D 19/10

(54) **REMOTE METER-READING CALORIMETER AND OPERATING METHOD**
FERNMESSGERÄTABLESENDES KALORIMETER SOWIE BETRIEBSVERFAHREN
CALORIMÈTRE À TÉLÉCOMPTAGE ET PROCÉDÉ DE FONCTIONNEMENT

(30) Priority: 17.01.2014 KR 20140006236
(43) Date of publication of application: 23.11.2016
(73) Proprietor: Korea Institute of Energy Research, Daejeon 305-343 (KR)
(72) Inventor: LEE, Jaeyong, Daejeon 305-335 (KR); IM, Yonghoon, Seoul 156-860 (KR); SHIM, Sootaek, Hwaseong-si Gyeonggi-do 445-160 (KR)
(74) Representative: Brevalex
(86) International application number: PCT/KR2014/000598
(87) International publication number: WO 2015/108219

(56) References cited:
- EP-A1- 2 000 788
- KR-A- 970 029 238
- KR-A- 20000 058 952
- KR-A- 20030 093 598
- KR-A- 20030 093 598
- KR-A- 20040 009 448
- KR-B1- 100 358 520
- KR-B1- 101 134 514

## Description

### [Technical Field]

The present invention relates to a calorimeter which calculates and measures an amount of energy for cooling or heating supplied through piping.

### [Background Art]

A district heating system is to supply hot water produced by using a large-scale heat production facility to buildings in a predetermined area and the like to be used for heating. The building using the district heating system pays the costs thereof according to its used calorie, and to this end, a calorimeter is installed in the separate building.

The calorimeter is installed in each household in a group residence place such as apartments or tenements in which central heating and district heating are performed to be used for measuring and displaying the calorie used in each household. Further, the calorimeter is also used as an industrial calorimeter as well as a housing calorimeter for each household. As a used example of the industrial calorimeter, the district heating corporation supplies heat to an air conditioning room of each apartment complex by using hot water and exchanges the heat in the air conditioning room of each apartment complex to supply the heat to each household. In this case, in the district heating corporation, the calorimeter is installed in the air conditioning room of each apartment complex. In this specification below, the heat using complex means a complex of receiving the heat from the heating corporation such as apartments, villas, and office building unlike each household.

The calorie measured in the calorimeter installed in each household or the heat using complex is recorded by reading a value indicated by the calorimeter when a meter-reading person which belongs to the organized business place in the corresponding area visits each household or each heat using complex for each unit period, for example, for each month.

The meter-reading contents recorded by the meter-reading person is collected in the corresponding organized business place to be issued in a form of notice of payment for the used calorie for each household or for each heat using complex.

Recently, by improving the meter-reading method by the direct visit of the meter-reading person as described above, a remote meter-reading calorimeter of remotely meter-reading the value of calorie calculated in the calorimeter installed for each household or each heat using complex has been required.

Document EP 2000788 A1 discloses an energy calculator with installation error detection.

### [Disclosure]

### [Technical Solution]

In order to solve the conventional problems, an object of the present invention is to provide a remote meter-reading system which can improve transmission efficiency of meter-reading data meter-read by a calorimeter.

In order to achieve the above object, an exemplary embodiment of the present invention provides a remote meter-reading calorimeter according to claim 1.

Another aspect of the present invention provides an operating method of a remote meter-reading calorimeter according to claim 12.

According to the present invention, the server may transmit a reference value corresponding to the failure to the calorimeter when receiving the second meter-reading data, and the calorimeter may correct sensing data received from the temperature sensor by the reference value.

As described above, according to the present invention, it is possible to improve transmission efficiency between the calorimeter and the server and reduce a transmission error possibility by varying an amount of transmitted data according to whether the failure has occurred or not.

Further, it is possible to facilitate management or maintenance of the calorimeter and rapidly respond the failure by verifying whether the failure occurs in the calorimeter in remote.

### [Description of Drawings]

FIG. 1 is a configuration diagram schematically illustrating a remote meter-reading system according to an exemplary embodiment of the present invention.
FIG. 2 is a configuration diagram illustrating a configuration of a remote meter-reading calorimeter side in the remote meter-reading system according to the exemplary embodiment of the present invention.
FIG. 3 is a block diagram illustrating a configuration of the remote meter-reading calorimeter according to the exemplary embodiment of the present invention.
FIG. 4 is an example of a data field structure of meter-reading data transmitted from the remote meter-reading calorimeter according to the exemplary embodiment of the present invention.
FIG. 5 is an exemplary flowchart illustrating an operating method of the remote meter-reading calorimeter according to the exemplary embodiment of the present invention.
FIG. 6 is a diagram for describing a process of correcting a value of calorie in failure.

### [Best Mode]

Hereinafter, some exemplary embodiments of the present invention will be described in detail with reference to the accompanying drawings. When reference numerals refer to components of each drawing, it is to be noted that although the same components are illustrated in different drawings, the same components are referred to by the same reference numerals as possible. Further, in the following description, a detailed explanation of known related technologies may be omitted to avoid unnecessarily obscuring the subject matter of the present invention.

Further, terms such as first, second, A, B, (a), and (b) may be used in describing the components of the exemplary embodiments according to the present invention. The terms are used to just distinguish the component from other components and the essence, sequence, or order of the corresponding component is not limited by the terms. When it is disclosed that any component is "connected", "coupled", or "linked" to other components, it should be understood that the component may be directly connected or linked to other components, but another component may be "connected", "coupled", or "linked" between the respective components.

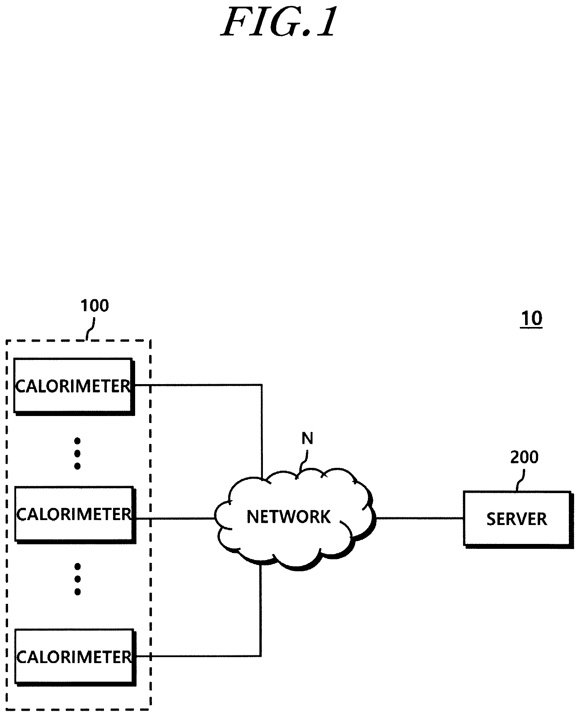

FIG. 1 is a configuration diagram schematically illustrating a remote meter-reading system according to an exemplary embodiment of the present invention.

Referring to FIG. 1, a remote meter-reading system 10 according to an exemplary embodiment of the present invention includes a plurality of remote meter-reading calorimeters 100 and a server 200 which is connected with the remote meter-reading calorimeters 100 though a network N to receive meter-reading data from the remote meter-reading calorimeters 100.

The remote meter-reading calorimeter 100 may be installed in each household or heat using complex, calculates a calorie used in a heating apparatus (for example, a boiler and the like) of each household or heat using complex installed with the remote meter-reading calorimeter 100, and transmits meter-reading data including the calculated value of caloric to the server 200.

The server 200 is connected with the remote meter-reading calorimeters 100 through the network N at a remote site to collect the meter-reading data received from each remote meter-reading calorimeter 100 and perform a statistical analysis for a heat used amount for each household or each complex and the like by using the collected meter-reading data.

The network N may be implemented by wired and wireless communication networks such as a PLC, a RS-485, a PSTN, a mobile communication network, a WPAN, and a WLAN, as a network in which data communication between the remote meter-reading calorimeters 100 and the server 200 is performed.

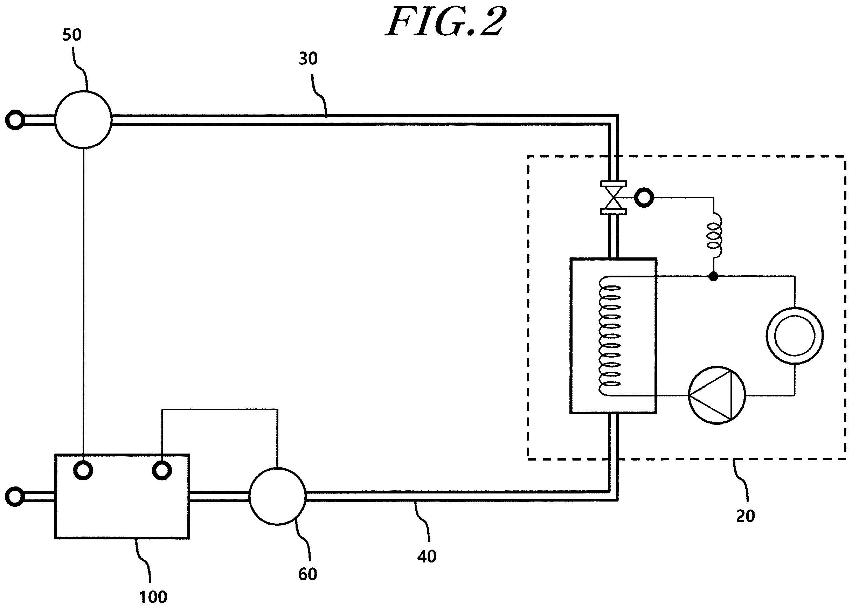

FIG. 2 is a configuration diagram illustrating a configuration of a remote meter-reading calorimeter side in the remote meter-reading system according to the exemplary embodiment of the present invention.

Referring to FIG. 2, the remote meter-reading system according to the exemplary embodiment of the present invention may include a calorimeter 100, an energy consumption source 20 (energy load in each household or complex), supply-side piping 30, recovery-side piping 40, a supply-side temperature sensor 50, a recovery-side temperature sensor 60, and the like.

Energy for cooling or heating supplied from an energy supply source for cooling or heating is transferred to the energy consumption source 20 flowing through the supply-side piping 30. The supplied energy is stored and transferred in a fluid, and the fluid may be generally a water form, but is not limited thereto and any fluid may be applied as long as the fluid can flow while holding the heat energy.

In the case of a heating system, a fluid (for example, hot water) supplied through the supply-side piping 30 supplies the energy while passing through the energy consumption source 20, and as a result, the fluid flowing in through the supply-side piping 30 flows out through the recovery-side piping 40 at a lower temperature than the flow-in state and returns to the supply source which has supplied the fluid.

The calorimeter 100 may be installed in each energy consumption source 20 as a means for determining how much the energy is used in an individual energy consumption source 20.

In the case of the heating system, generally, as illustrated in FIG. 2, the calorimeter 100 is installed in the recovery-side piping 40, and electronic components used in the calorimeter 100 are weak for the heat and thus, preferably, may be installed in the recovery-side piping 40 that maintains a relatively low temperature.

In a similar principle, in the cooling system, the calorimeter 100 may be installed in the supply-side piping 30 that maintains a relatively low temperature.

Meanwhile, in this specification, the case where the exemplary embodiment of the present invention is applied to the heating system is exemplified, but the present invention is not limited thereto, and obviously, the exemplary embodiment of the present invention may be applied to the cooling system.

The calorimeter 100 needs to acquire temperature information of the supply-side piping 30 and the recovery-side piping 40 in order to calculate the amount of energy supplied through the piping, and acquires the temperature information through a supply-side temperature sensor 50 and a recovery-side temperature sensor 60 which are installed in the respective piping.

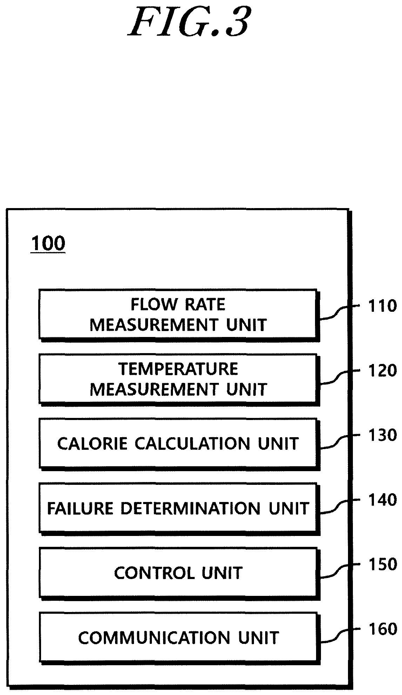

FIG. 3 is a block diagram illustrating a configuration of a remote meter-reading calorimeter according to the exemplary embodiment of the present invention.

Referring to FIG. 3, the remote meter-reading calorimeter 100 according to the exemplary embodiment of the present invention may include a communication unit 160 that transmits and receives data to and from the server 200, a flow rate measurement unit 110 that measures an amount of fluid supplied through a piping, a temperature measurement unit 120 that measures a temperature difference between the supply-side piping and the recovery-side piping, a calorie calculation unit 130 that calculates an amount of energy for cooling or heating supplied through the piping by using the measured flow rate value and the measured value of the temperature difference between the supply-side piping and the recovery-side piping, and a control unit 150 that controls meter-reading data to be generated on the basis of the calculated value of calorie and transmitted to the server 200.

Further, the remote meter-reading calorimeter 100 includes a failure determination unit 140 that determines whether failure has occurred on the basis of the respective measured values received from the flow rate measurement unit 110 and the temperature measurement unit 120, and the meter-reading data transmitted to the server 200 may vary according to the determined result in the failure determination unit 140.

The flow rate measurement unit 110 measures the amount of the fluid supplied through the piping. The flow rate measurement unit 110 may be installed in the supply-side piping 30 and to measure the flow rate or installed in the recovery-side piping 40 to measure the flow rate. As the detailed methods of measuring the flow rate, a method of generating an electrical signal every constant volume by decelerating rotation of a turbine by a gear which is proportional to a passing volume and transferring the electrical signal to the calorie calculation unit 130, and the like may be applied, but the present invention is not limited thereto and various methods contrived to measure the amount of the fluid may be applied.

The temperature measurement unit 120 measures the temperature difference between the supply-side piping 30 and the recovery-side piping 40, and the temperatures of the piping may be measured on the basis of the sensor values received from the supply-side temperature sensor 50 and the recovery-side temperature sensor 60 using a resistance temperature detector (RTD).

The calorie calculation unit 130 calculates the flow rate value measured through the flow rate measurement unit 110 and the amount of the supplied energy by using the measured temperature difference value between the supply-side piping 30 and the recovery-side piping 40. The calorie calculation unit 130 calculates the amount of the energy supplied to the energy consumption source through the piping on the basis of the flow rate value measured in the flow rate measurement unit 110 and the temperature difference value measured in the temperature measurement unit 120.

The calorie calculation unit 130 calculates the calorie by a mass m, a specific heat c, and a temperature change value ΔT according to Formula of Q = m × c × ΔT, and the mass m and the specific heat c are determined according to a flow rate and a type (for example, water) of fluid and the temperature change value ΔT is determined according to the temperature difference measured value between the supply-side piping 30 and the recovery-side piping 40.

The failure determination unit 140 may determine malfunction, that is, failure for the calorimeter 100 or the temperature sensors 50 and 60 connected with the calorimeter.

As a first failure example of determining whether the failure has occurred, when the failure determination unit 140 may determine that the failure has occurred in the case where the flow rate measured value received from the flow rate measurement unit 110 is included in a predetermined flow rate determination value or flow rate determination range and the temperature difference measured value received from the temperature measurement unit 120 deviates from a predetermined temperature determination value or temperature determination range.

In the first failure example, the principle of determining whether the failure of the calorimeter has occurred by the failure determination unit is to determine that there is an error in a meter in the case where the energy is not supplied through the fluid, but likes to be supplied. The failure determination unit 140 determines whether the energy is supplied through the fluid on the basis of the flow rate measured value received from the flow rate measurement unit 110 and the temperature difference measured value received from the temperature measurement unit 120, and even though the flow rate flowing through the piping is slight or there is no change in flow rate, in the case where there is a difference between the temperature value sensed in the supply-side piping 30 and the temperature value sensed in the recovery-side piping 40, it may be determined that the failure in the calorimeter or the temperature sensor has occurred.

The predetermined flow rate determination value in the failure determination unit 140 may be basically set to 0 (a unit is omitted), but may be set in a predetermined range based on 0 by applying an error range.

Further, the temperature determination range may be set based on the temperature difference value which can determine that the energy is supplied, and accordingly, may be set to the temperature difference value other than the temperature determination range.

As a second failure example of determining whether the failure has occurred, the failure determination unit 140 may determine that the failure has occurred when there is an error in the supply-side temperature sensor 50.

The error of the supply-side temperature sensor 50 may be first determined by the temperature measurement unit 120. For example, when the wire connected to the supply-side temperature sensor 50 is disconnected and the signal is not received from the supply-side temperature sensor 50, the temperature measurement unit 120 may determine that there is an error in the supply-side temperature sensor 50. Alternatively, the supply-side temperature sensor 50 may show a minimum value (for example, 0×0000) or a maximum value (for example, 0×FFFF) by the disconnection, and the temperature measurement unit 120 may determine that there is an error in the supply-side temperature sensor 50 when the supply-side temperature sensor 50 shows the error value. As yet another example, when the supply-side temperature sensor 50 is separated from the supply-side piping 30, the supply-side temperature sensor 50 may measure a room temperature value (for example, 15°C), and the temperature measurement unit 120 may determine that there is an error in the supply-side temperature sensor 50 when the measured value of the supply-side temperature sensor 50 is the value in the room temperature range.

The temperature measurement unit 120 transmits information on whether the error of the supply-side temperature sensor 50 has occurred which is determined like the above example to the failure determination unit 140 and then the failure determination unit 140 may determine that there is an error in the supply-side temperature sensor 50.

As another example in which the failure determination unit 140 determines whether there is an error in the supply-side temperature sensor 50, the temperature measurement unit 120 transmits the measured value of the supply-side temperature sensor 50 to the failure determination unit 140 and the failure determination unit 140 may determine whether there is an error in the supply-side temperature sensor 50 by determine whether there is the error of the measured value. For example, when the measured value is the room temperature or the minimum value (for example, 0×0000) or the maximum value (for example, 0×FFFF), the failure determination unit 140 may determine that there is an error in the supply-side temperature sensor 50. Alternatively, when the measured value is not received, the failure determination unit 140 may determine that there is an error in the supply-side temperature sensor 50.

As a third failure example of determining whether the failure has occurred, the failure determination unit 140 may determine that the failure has occurred when there is an error in the recovery-side temperature sensor 60.

As the method of determining whether there is an error in the recovery-side temperature sensor 60 by the failure determination unit 140, the same method as the method of determining whether there is an error in the supply-side temperature sensor 50 may be used. In this case, as described above, the temperature measurement unit 120 first determines whether there is an error in the recovery-side temperature sensor 60 and transmits the information on whether there is an error in the recovery-side temperature sensor 60 to the failure determination unit 140 and then the failure determination unit 140 may determine whether there is an error in the recovery-side temperature sensor 60. Further, as described above, the temperature measurement unit 120 transmits the measured value of the recovery-side temperature sensor 60 to the failure determination unit 140 and the failure determination unit 140 may determine whether there is an error in the recovery-side temperature sensor 60 by determining whether there is an error in the measured value.

As a fourth failure example of determining whether the failure has occurred, the failure determination unit 140 may determine that the failure has occurred when the temperature difference measured value is beyond the predetermined range.

Meanwhile, according to the determined result from the failure determination unit 140, the meter-reading data which is generated in the control unit 150 and provided to the server 200 may be generated to have different lengths thereof.

The control unit 150 may generate the meter-reading data by calculating a value of calorie (for example, an integrated value of calorie or an instantaneous value of calorie) on the basis of the calculated value received from the calorie calculation unit 130 and in this case, the control unit 150 generates first meter-reading data when it is verified that the determined result received from the failure determination unit 140 is in the normal state in which the failure has not occurred.

However, when it is verified that the determined result received from the failure determination unit 140 is in the abnormal state in which the failure has occurred, the control unit 150 generates second meter-reading data which is different from the first meter-reading data.

The generated meter-reading data is transmitted to the server 200 through the communication unit 160.

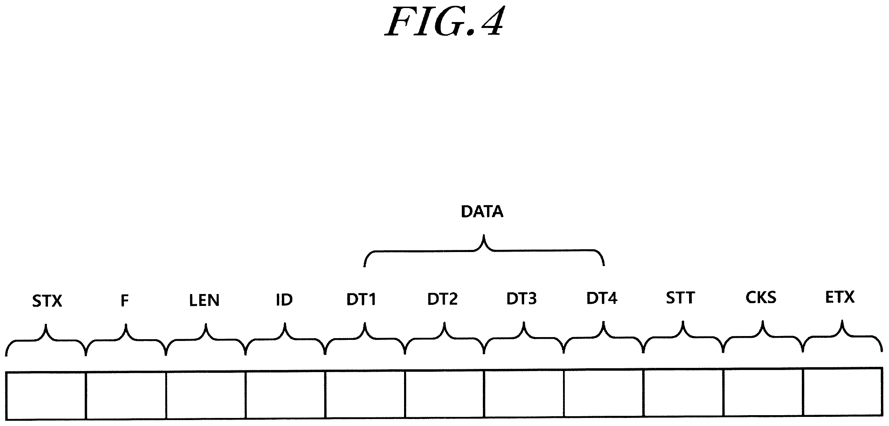

FIG. 4 is an example of a data field structure of meter-reading data transmitted from the remote meter-reading calorimeter according to the exemplary embodiment of the present invention.

Referring to FIG. 4, the meter-reading data may include STX, F, LEN, ID, DATA, STT, CKS, and ETX fields.

The STX is a field representing the start of the meter-reading data and the ETX is a field representing the end of the meter-reading data.

The F is a field representing a message type of the meter-reading data. For example, when the F field value is '1', the transmitted data is the meter-reading data.

The LEN is a field representing a length of the meter-reading data. The LEN may represent the data length from the STX to the ETX by a byte unit. Alternatively, the LEN may also represent only the length of the DATA field by a byte unit.

The ID is a field representing a unique value given to the calorimeter.

The STT is a field representing a state of the calorimeter.

The CKS is a check sum value and the check sum value may be calculated by summing the STX to the STT fields.

The DATA field is a data value which the calorimeter 100 intends to transmit to the server 200.

The DATA field may include four subfields. DT1 is a field representing an integrated value of calorie, DT2 is a field representing an instantaneous value of calorie, DT3 is a field representing a temperature value, and DT4 is a field representing a flow rate. Herein, the temperature value may be a temperature measured value for the supply-side piping 30 or a temperature measured value for the recovery-side piping 40.

The control unit 150 may differently generate the first meter-reading data and the second meter-reading data as described above by adjusting the length of the DATA field.

For example, the control unit 150 may generate the first meter-reading data by including only the DT1 in the DATA field, when there is no error in the calorimeter 100 according to the determined result received from the failure determination unit 140. On the contrary, when it is determined that there is an error in the calorimeter 100 according to the determined result received from the failure determination unit 140, the control unit 150 may generate the second meter-reading data by further including at least one subfield of DT2, DT3 and DT4 in the DATA field.

As such, when the control unit 150 generates the meter-reading data so that the content (type) and the amount of the data transmitted to the server 200 are different from each other in the case where the failure has not occurred and the failure has occurred, in the case of transmitting the meter-reading data in the normal state, the calorimeter 100 may minimize resources required for generation and transmission of the data and reduce the network load by transmitting a relatively small amount of data.

Further, in the case where the failure has occurred, the calorimeter 100 transmits the meter-reading data that particularly include status information in the state where the failure has occurred to immediately recognize the failure when the failure has occurred in the server 200, rapidly determine the cause, a restoring method, or the like of the failure on the basis of the meter-reading data received from the corresponding calorimeter, and rapidly perform data continuity immediately before the failure occurrence is sensed even after the calorimeter 100 is restored to the normal state.

The control unit 150 may generate the second meter-reading data by including a failure flag representing that the failure has occurred in the corresponding F field. Alternatively, the control unit 150 may generate the second meter-reading data by including the failure flag in the STT field.

In this case, the control unit 150 may control a period when the first meter-reading data is transmitted to the server 200 and a period when the second meter-reading data is transmitted to the server 200, according to the determined result received from the failure determination unit 140 to be different from each other.

That is, the control unit 150 may control the periods of transmitting the meter-reading data to be different from each other according to whether the failure of the calorimeter 100 has occurred. In this case, the first meter-reading data in the normal state is provided to the server 200 at a period of Tl, in the abnormal state, the second meter-reading data may be provided to the server 200 at a period of T2 that has a shorter value than T1.

In the remote meter-reading system according to the exemplary embodiment of the present invention configured as described above, the remote meter-reading calorimeter operates as follows.

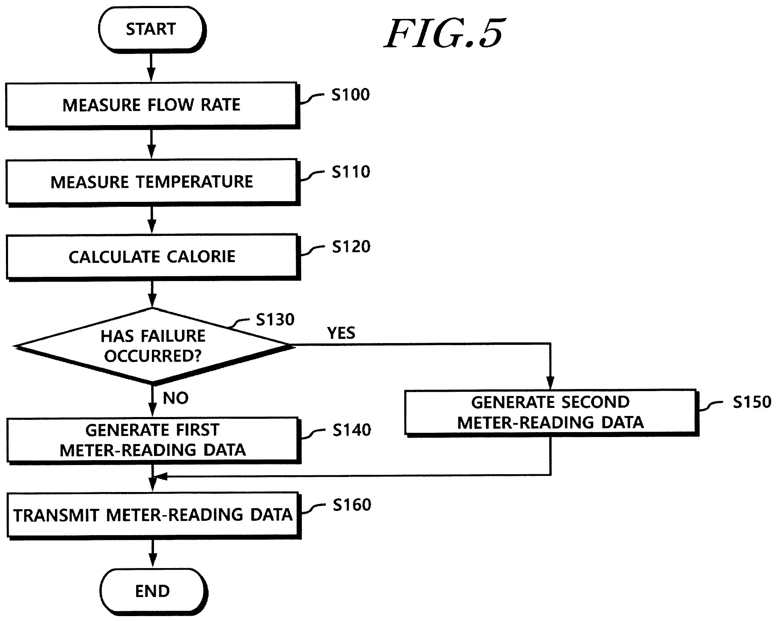

FIG. 5 is an exemplary flowchart illustrating an operating method of the remote meter-reading calorimeter according to the exemplary embodiment of the present invention.

Referring to FIG. 5, in an operating method of the remote meter-reading calorimeter according to the exemplary embodiment of the present invention, first, an amount of fluid supplied through the piping is measured (S100).

Next, a temperature difference between the supply-side piping and the recovery-side piping is measured (S110).

An amount of energy for cooling or heating supplied through the piping is calculated on the basis of the measured flow rate value and the temperature difference measured value between the supply-side piping and the recovery-side piping (S120).

Further, whether the failure has occurred is determined on the basis of the temperature difference measured value and the flow rate measured value.

Next, according to the determined result of the failure determining step, in the case of determining that the failure has not occurred, the first meter-reading data is generated to be transmitted to the server (S140 and S160), and in the case of determining that the failure has occurred, the second meter-reading data different from the first meter-reading data is generated to be transmitted to the server (S150 and S160).

Meanwhile, the operating method may further include correcting a value of calorie to transmit the corrected value of calorie to the server when the calorimeter 100 determines that the failure has occurred.

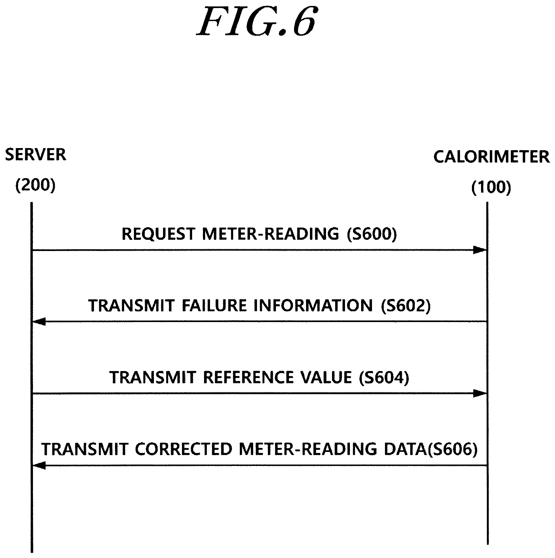

FIG. 6 is a diagram for describing a process of correcting a value of calorie in failure.

Referring to FIG. 6, the server 200 transmits a message requesting the meter-reading to the calorimeter 100 (S600).

The calorimeter 100 transmits the meter-reading data to the server 200 in response to the meter-reading request message. In this case, when the failure determination unit 140 determines that the failure has occurred in the calorimeter 100, the control unit 150 transmits a failure information message including failure information to the server 100 through the communication unit 160 (S602). Herein, the failure information message may be the second meter-reading data described above. In this case, according to the exemplary embodiment, the failure information message has the same data length as the first meter-reading data and may represent whether the failure has occurred and the failure type by using the F field or the STT field.

The meter-reading request process (S600) and the failure information transmitting process (S602) may be repeated by predetermined numbers. The reason is that the failure may occur temporarily.

When the information message is continuously received, the server 200 may transmit a reference value to the calorimeter 100 (S604).

For example, in the case of the second failure example described above with reference to FIG. 3, the control unit 150 may generate the failure information message by including information regarding that there is an error in the supply-side temperature sensor 50 in the STT field. In this case, the server 200 may set at least one value of a supply temperature in a machine room, a supply temperature in a standpipe, a supply temperature in adjacent households on the same floor, and a supply temperature in adjacent upper and lower households as a reference value to transmit the value to the calorimeter 100. Herein, the machine room is a space for managing piping in the building such as an apartment in which a plurality of independent spaces is gathered. As a result, the server 200 measures the supply temperature of a piping which is close to the supply-side piping 30 to transmit the measured supply temperature to the calorimeter 100 as a reference value.

As another example, in the case of the third failure example described above with reference to FIG. 3, the control unit 150 may generate the failure information message by including information regarding that there is an error in the recovery-side temperature sensor 60 in the STT field. In this case, the server 200 may set at least one value of a recovery temperature in a machine room, a recovery temperature in a standpipe, a recovery temperature in adjacent households on the same floor, and a recovery temperature in adjacent upper and lower households as a reference value to transmit the value to the calorimeter 100. As a result, the server 200 measures the recovery temperature of a piping which is close to the recovery-side piping 40 to transmit the measured recovery temperature to the calorimeter 100 as a reference value.

As yet another example, in the case of the fourth failure example described above with reference to FIG. 3, the control unit 150 may generate the failure information message by including information regarding that the temperature difference is beyond the predetermined range in the STT field. In this case, the server 200 may not determine that there is an error in any sensor of the supply-side temperature sensor 50 and the recovery-side temperature sensor 60 and thus transmit a reference value including at least one value of the supply temperature in the machine room, the supply temperature in the standpipe, the supply temperature in adjacent households on the same floor, and the supply temperature in adjacent upper and lower households and at least one value of the recovery temperature in the machine room, the recovery temperature in the standpipe, the recovery temperature in adjacent households on the same floor, and the recovery temperature in adjacent upper and lower households to the calorimeter 100. As a result, the server 200 measures the supply temperature of the piping which is close to the supply-side piping 30 and the recovery temperature of the piping which is close to the recovery-side piping 40 to transmit the measured supply temperatures to the calorimeter 100 as a reference value.

The calorimeter 100 may transmit the meter-reading data that corrects the value of calorie by the received reference value to the server 200 (S606).

For example, in the second failure example, when the calorimeter 100 receives the supply temperature in adjacent households on the same floor as the reference value, the calorimeter 100 may calculate a difference between the received reference value instead of the measured value of the supply-side temperature sensor 50 in the error state and the measured value of the recovery-side temperature sensor 60. In addition, the calorimeter 100 may calculate the value of calorie by using the difference value and the flow rate measured value. The calculated value of calorie is included in the meter-reading data to be transmitted to the server 200.

In the case of the fourth failure example, the calorimeter 100 may first determine whether the failure occurs in any temperature sensor by the received reference value. For example, when the calorimeter 100 receives the supply temperature in the machine room and the recovery temperature in the machine room by the reference value, the calorimeter 100 compares the measured value of the supply-side temperature sensor 50 with the supply temperature in the machine room and compares the measured value of the recovery-side temperature sensor 60 with the recovery temperature in the machine room. The calorimeter 100 may determine that there is an error in the temperature sensor having a large difference according to the comparison. In other words, the calorimeter 100 may determine the temperature measured value in the failure of the temperature measured value in the supply-side piping and the temperature measured value in the recovery-side piping. According to the determined result, the calorimeter 100 may calculate the value of calorie by correcting the measured value of the temperature sensor having the error by the reference value. The calculated value of calorie is included in the meter-reading data to be transmitted to the server 200.

Hereinabove, the method of measuring the calorie according to the exemplary embodiment of the present invention is performed by the procedure illustrated in FIG. 5, but for convenience of description, within the range without departing from the essential concept of the present invention, the performed procedure of each process is changed, two or more processes are integrated, one process is separated from two or more processes according to the implementation scheme.

Hereinabove, even if it is described that all of constituent elements constituting the exemplary embodiment of the present invention are coupled as a single unit or coupled to be operated as a single unit, the present invention is not necessarily limited to the exemplary embodiment. That is, among the components, one or more constituent elements may be selectively coupled to be operated within the scope of the object of the present invention. In addition, although each of the constituent elements may be implemented as an independent hardware, some or all of the constituent elements may be selectively combined with each other, so that they can be implemented as a computer program having one or more program modules for executing some or all of the functions combined in one or multiple hardware. Codes and code segments constituting the computer program can be easily inferred by those skilled in the art. The computer program is stored in computer readable media to be read and executed by the computer and thus the exemplary embodiment of the present invention can be implemented. The storage media of the computer program may include a magnetic recording medium, an optical recording medium, or a carrier wave medium.

## Claims

1. A remote meter-reading calorimeter (100) comprising:
a flow rate measurement unit (110) for measuring an amount of fluid supplied through piping;
a temperature measurement unit (120) for measuring a temperature difference between supply-side piping and recovery-side piping;
a calorie calculation unit (130) for calculating a value of calorie supplied through the piping by using the measured flow rate value and the temperature difference value between the supply-side piping and the recovery-side piping;
a failure determination unit (140) for determining, on the basis of the respective measured values received from the flow rate measurement unit and the temperature measurement unit, whether a failure has occurred; and **characterized by** a control unit (150) for generating meter-reading data to transmit the generated meter-reading data to a server, the meter-reading data being generated by correcting the value of calorie by using a reference value received from the server when it is determined that a failure has occurred according to the determined result received from the failure determination unit,
wherein when the failure determination unit determines that a failure has occurred in the temperature measurement for the supply-side piping, the control unit receives a supply temperature of piping which is close to the supply-side piping as the reference value and corrects the value of calorie by using the reference value to generate the meter-reading data.

2. The remote meter-reading calorimeter of claim 1, wherein the control unit (150) generates first meter-reading data when it is determined that the failure has not occurred and generates second meter-reading data that further includes a data field larger than the one of the first meter-reading data when it is determined that the failure has occurred, according to the determined result received from the failure determination unit (140).

3. The remote meter-reading calorimeter of claim 2, wherein the control unit (150) calculates an integrated value of calorie and an instantaneous value of calorie, respectively, on the basis of the calculated value received from the calorie calculation unit (130) .

4. The remote meter-reading calorimeter of claim 3, wherein the first meter-reading data includes the integrated value of calorie and the second meter-reading data includes at least one value of the instantaneous value of calorie, the temperature measured value of the supply-side piping, a temperature measured value of the recovery-side piping, and the flow rate measured value, and the integrated value of calorie.

5. The remote meter-reading calorimeter of any of claims 2 to 4, wherein the control unit (150) generates the second meter-reading data including a failure flag for representing that the failure has occurred.

6. The remote meter-reading calorimeter of any of claims 2 to 5, wherein the control unit (150) controls a period when the first meter-reading data is transmitted to the server and a period when the second meter-reading data is transmitted to the server to be different from each other, according to the determined result received from the failure determination unit (140).

7. The remote meter-reading calorimeter of any of claims 1 to 6, wherein the failure determination unit (140) determines that the failure has occurred in the case where it is determined that the flow rate measured value received from the flow rate measurement unit (110) is included in a predetermined flow rate determination range and the temperature difference value received from the temperature measurement unit (120) deviates from a predetermined temperature determination range.

8. The remote meter-reading calorimeter of any of claims 1-7, wherein the supply temperature of the piping which is close to the supply-side piping (30) is one of a supply temperature in a machine room, a supply temperature in a standpipe, a supply temperature in adjacent households on the same floor, and a supply temperature in adjacent upper and lower households.

9. The remote meter-reading calorimeter of any of claims 1 to 8, wherein the failure determination unit (140) determines that the failure has occurred, when the temperature difference value received from the temperature measurement unit (120) deviates from a predetermined range.

10. The remote meter-reading calorimeter of claim 9, wherein the control unit (150) receives a reference value including the supply temperature of the piping which is close to the supply-side piping (30) and a recovery temperature of piping which is close to the recovery-side piping (40) and compares the reference value with the temperature measured value for the supply-side piping (30) and the temperature measured value for the recovery-side piping (40) to determine the temperature measured value in which the failure has occurred.

11. An operating method of a remote meter-reading calorimeter (100), the operating method comprising the steps of:
a fluid measuring step (S100) of measuring an amount of fluid supplied through piping;
a temperature difference measuring step (S110) of measuring a temperature difference between supply-side piping (30) and recovery-side piping (40);
a calorie calculating step (S120) of calculating a value of calorie supplied through the piping by using the measured flow rate value and the temperature difference value between the supply-side piping (30) and the recovery-side piping (40);
a failure determining step (S130) of determining, on the basis of the temperature difference value and the measured flow rate value, whether a failure has occurred; and
a meter-reading data transmitting step (S 160) of transmitting first meter-reading data to a server (200), when it is determined that a failure has not occurred and of transmitting second meter-reading data that is different from the first meter-reading data to the server (200), when it is determined that a failure has occurred, according to the determined result of the failure determining step the method being **characterized in that**, when it is determined that a failure has occurred in the temperature measurement for the supply-side piping, the server (200) transmits to the remote meter-reading calorimeter (100) a supply temperature of piping which is close to the supply-side piping as a reference value and said calorimeter (100) corrects the value of calorie by using the reference value to generate the meter-reading data.

12. The operating method of a remote meter-reading calorimeter of claim 11, wherein said second meter-reading data includes a data field larger than the one of the first meter-reading data when it is determined that the failure has occurred, according to the determined result of the failure determining step.

13. The operating method of a remote meter-reading calorimeter of claim 11 or 12, wherein the supply temperature of the piping which is close to the supply-side piping (30) is one of a supply temperature in a machine room, a supply temperature in a standpipe, a supply temperature in adjacent households on the same floor, and a supply temperature in adjacent upper and lower households.

14. The operating method of a remote meter-reading calorimeter of any of claims 11 to 13, whrein it is determined that the failure has occurred in the case where it is determined that the measured flow rate value is included in a predetermined flow rate determination range and the temperature difference value deviates from a predetermined temperature determination range.

15. The operating method of a remote meter-reading calorimeter of any of claims 11 to 14, wherein it is determined that a failure has occurred, when the temperature difference value deviates from a predetermined range.

## Patentansprüche

1. Fern-Ablese-Kalorimeter (100), umfassend:
eine Strömungsraten-Messeinheit (110) zum Messen einer Menge von Fluid, welches durch eine Leitung geliefert wird;
eine Temperatur-Messeinheit (120) zum Messen einer Temperaturdifferenz zwischen einer Versorgungs-seitigen Leitung und
einer Rückführungs-seitigen Leitung;
eine Kalorie-Berechnungseinheit (130) zum Berechnen eines Werts von Kalorien, welche durch die Leitung geliefert werden, unter Verwendung des gemessenen Strömungsraten-Werts und des Temperaturdifferenz-Werts zwischen der Versorgungs-seitigen Leitung und der Rückführungs-seitigen Leitung;
eine Fehler-Bestimmungseinheit (140) zum Bestimmen, auf der Grundlage der jeweiligen gemessenen Werte, welche von der Strömungsraten-Messeinheit und der Temperatur-Messeinheit empfangen werden, ob ein Fehler aufgetreten ist; und **gekennzeichnet durch**
eine Regel-/Steuereinheit (150) zum Erzeugen von Ablesedaten, um die erzeugten Ablesedaten an einen Server zu übermitteln, wobei die Ablesedaten durch Korrigieren des Kaloriewerts erzeugt sind, wobei ein Referenzwert verwendet wird, welcher von dem Server empfangen wird, wenn es bestimmt wird, dass ein Fehler aufgetreten ist, gemäß dem bestimmten Ergebnis, welches von der Fehler-Bestimmungseinheit empfangen worden ist,
wobei, wenn die Fehler-Bestimmungseinheit bestimmt, dass ein Fehler in der Temperaturmessung für die Versorgungs-seitige Leitung aufgetreten ist, die Regel-/Steuereinheit eine Versorgungstemperatur einer Leitung empfängt, welche nahe zu der Versorgung-seitigen Leitung ist, als den Referenzwert und den Kaloriewert durch Verwendung des Referenzwerts korrigiert, um die Ablesedaten zu erzeugen.

2. Fern-Ablese-Kalorimeter nach Anspruch 1, wobei die Regel-/Steuereinheit (150) erste Ablesedaten erzeugt, wenn es bestimmt wird, dass der Fehler nicht aufgetreten ist, und zweite Ablesedaten erzeugt, welche ferner ein Datenfeld umfassen, welches größer ist als das eine der ersten Ablesedaten, wenn es bestimmt wird, dass der Fehler aufgetreten ist, gemäß dem bestimmten Ergebnis, welches von der Fehler-Bestimmungseinheit (140) empfangen worden ist.

3. Fern-Ablese-Kalorimeter nach Anspruch 2, wobei die Regel-/Steuereinheit (150) einen integrierten Kaloriewert bzw. einen momentanen Kaloriewert auf der Grundlage des berechneten Werts berechnet, welcher von der Kalorie-Berechnungseinheit (130) empfangen worden ist.

4. Fern-Ablese-Kalorimeter nach Anspruch 3, wobei die ersten Ablesedaten den integrierten Kaloriewert und die zweiten Ablesedaten wenigstens einen Wert aus dem momentanen Kaloriewert, dem gemessenen Temperaturwert der Versorgungs-seitigen Leitung, einem gemessenen Temperaturwert der Rückführungs-seitigen Leitung und dem gemessenen Strömungsraten-Wert, und den integrierten Kaloriewert umfassen.

5. Fern-Ablese-Kalorimeter nach einem der Ansprüche 2 bis 4, wobei die Regel-/Steuereinheit (150) die zweiten Ablesedaten erzeugt, umfassend eine Fehler-Markierung zum Repräsentieren, dass der Fehler aufgetreten ist.

6. Fern-Ablese-Kalorimeter nach einem der Ansprüche 2 bis 5, wobei die Regel-/Steuereinheit (150) eine Periode, wenn die ersten Ablesedaten an den Server übertragen werden, und eine Periode regelt/steuert, wenn die zweiten Ablesedaten an den Server übertragen werden, um voneinander unterschiedlich zu sein, gemäß dem bestimmten Ergebnis, welches von der Fehler-Bestimmungseinheit (140) empfangen worden ist.

7. Fern-Ablese-Kalorimeter nach einem der Ansprüche 1 bis 6, wobei die Fehler-Bestimmungseinheit (140) bestimmt, dass der Fehler aufgetreten ist, in dem Fall, in welchem es bestimmt wird, dass der gemessene Strömungsraten-Wert, welcher von der Strömungsraten-Messeinheit (110) empfangen worden ist, in einem vorbestimmten Strömungsraten-Bestimmungsbereich umfasst ist und der Temperaturdifferenz-Wert, welcher von der Temperatur-Messeinheit (120) empfangen worden ist, von einem vorbestimmten Temperatur-Bestimmungsbereich abweicht.

8. Fern-Ablese-Kalorimeter nach einem der Ansprüche 1 bis 7, wobei die Versorgung-Temperatur der Leitung, welche nahe zu der Versorgungs-seitigen Leitung (30) ist, eine ist aus einer Versorgungstemperatur in einem Maschinenraum, einer Versorgungstemperatur in einer Standleitung, einer Versorgungstemperatur in benachbarten Haushalten auf dem gleichen Stockwerk und einer Versorgungstemperatur in benachbarten oberen und unteren Haushalten ist.

9. Fern-Ablese-Kalorimeter nach einem der Ansprüche 1 bis 8, wobei die Fehler-Bestimmungseinheit (140) bestimmt, dass der Fehler aufgetreten ist, wenn der Temperaturdifferenz-Wert, welcher von der Temperatur-Messeinheit (120) empfangen worden ist, von einem vorbestimmten Bereich abweicht.

10. Fern-Ablese-Kalorimeter nach Anspruch 9, wobei die Regel-/Steuereinheit (150) einen Referenzwert empfängt, umfassend die Versorgungstemperatur der Leitung, welche nahe zu der Versorgungs-seitigen Leitung (30) ist und eine Rückführungstemperatur einer Leitung, welche nahe zu der Rückführungs-seitigen Leitung (40) ist, und den Referenzwert mit dem gemessenen Temperaturwert für die Versorgung-seitige Leitung (30) und dem gemessenen Temperaturwert für die Rückführung-seitige Leitung (40) vergleicht, um den gemessenen Temperaturwert zu bestimmen, in welchem der Fehler aufgetreten ist.

11. Betriebsverfahren für ein Fern-Ablese-Kalorimeter (100), wobei das Betriebsverfahren die Schritte umfasst:
einen Fluid-Messschritt (S100) eines Messens einer Menge von Fluid,
welches durch eine Leitung geliefert wird;
einen Temperaturdifferenz-Messschritt (S110) eines Messens einer Temperaturdifferenz zwischen einer Versorgungs-seitigen Leitung (30) und einer Rückführungs-seitigen Leitung (40);
einen Kalorie-Berechnungsschritt (S120) eines Berechnens eines Werts von Kalorien, welche durch die Leitung geliefert werden, unter Verwendung des gemessenen Strömungsraten-Werts und des Temperaturdifferenz-Werts zwischen der Versorgungs-seitigen Leitung (30) und der Rückführungs-seitigen Leitung (40);
einen Fehler-Bestimmungsschritt (S130) eines Bestimmens, auf der Grundlage des Temperaturdifferenz-Werts und des gemessenen Strömungsraten-Werts, ob ein Fehler aufgetreten ist; und
einen Ablesedaten-Übertragungsschritt (S160) eines Übertragens von ersten Ablesedaten an einen Server (200), wenn es bestimmt wird,
dass ein Fehler nicht aufgetreten ist, und eines Übertragens von zweiten Ablesedaten, welche von den ersten Ablesedaten verschieden sind, an den Server (200), wenn es bestimmt wird, dass ein Fehler aufgetreten ist, gemäß dem bestimmten Ergebnis des Fehler-Bestimmungsschritts,
wobei das Verfahren **dadurch gekennzeichnet ist, dass**
wenn es bestimmt wird, dass ein Fehler in der Temperaturmessung für die Versorgungs-seitige Leitung aufgetreten ist, der Server (200) an das Fern-Ablese-Kalorimeter (100) eine Versorgungstemperatur einer Leitung überträgt, welche nahe zu der Versorgungs-seitigen Leitung ist, als einen Referenzwert und das Kalorimeter (100) den Kaloriewert unter Verwendung des Referenzwerts korrigiert, um die Ablesedaten zu erzeugen.

12. Betriebsverfahren eines Fern-Ablese-Kalorimeters nach Anspruch 11, wobei die zweiten Ablesedaten ein Datenfeld umfassen, welches größer ist als das eine aus den ersten Ablesedaten, wenn es bestimmt wird, dass der Fehler aufgetreten ist, gemäß dem bestimmten Ergebnis des Fehler-Bestimmungsschritts.

13. Betriebsverfahren eines Fern-Ablese-Kalorimeters nach Anspruch 11 oder 12, wobei die Versorgungstemperatur der Leitung, welche nahe zu der Versorgungs-seitigen Leitung (30) ist, eine ist aus einer Versorgungstemperatur in einem Maschinenraum, einer Versorgungstemperatur in einer Standleitung, einer Versorgungstemperatur in benachbarten Haushalten auf dem gleichen Stockwerk und einer Versorgungstemperatur in benachbarten oberen und unteren Haushalten.

14. Betriebsverfahren eines Fern-Ablese-Kalorimeters nach einem der Ansprüche 11 bis 13, wobei es bestimmt wird, dass der Fehler aufgetreten ist, in dem Fall, in welchem es bestimmt wird, dass der gemessene Strömungsraten-Wert in einem vorbestimmten Strömungsraten-Bestimmungsbereich umfasst ist und der Temperaturdifferenz-Wert von einem vorbestimmten Temperatur-Bestimmungsbereich abweicht.

15. Betriebsverfahren eines Fern-Ablese-Kalorimeters nach einem der Ansprüche 11 bis 14, wobei es bestimmt wird, dass ein Fehler aufgetreten ist, wenn der Temperaturdifferenz-Wert von einem vorbestimmten Bereich abweicht.

## Revendications

1. Calorimètre à télécomptage (100) comprenant :
une unité de mesure de débit (110) pour mesurer une quantité de fluide fourni par l'intermédiaire d'une canalisation ;
une unité de mesure de température (120) pour mesurer une différence de température entre une canalisation de côté d'alimentation et une canalisation de côté de récupération ;
une unité de calcul de calories (130) pour calculer une valeur de calories fournies par l'intermédiaire de la canalisation en utilisant la valeur de débit mesurée et la valeur de différence de température entre la canalisation de côté d'alimentation et la canalisation de côté de récupération ;
une unité de détermination de défaillance (140) pour déterminer, sur la base des valeurs mesurées respectives reçues de l'unité de mesure de débit et de l'unité de mesure de température, si une défaillance est survenue ; et **caractérisé par**
une unité de commande (150) pour générer des données de comptage pour transmettre les données de comptage générées à un serveur, les données de comptage étant générées par la correction de la valeur de calories en utilisant une valeur de référence reçue en provenance du serveur lorsqu'il est déterminé qu'une défaillance est survenue en fonction du résultat déterminé reçu en provenance de l'unité de détermination de défaillance,
dans lequel, lorsque l'unité de détermination de défaillance détermine qu'une défaillance est survenue dans la mesure de température pour la canalisation de côté d'alimentation, l'unité de commande reçoit une température d'alimentation d'une canalisation qui est proche de la canalisation de côté d'alimentation en tant que la valeur de référence et corrige la valeur de calories par l'utilisation de la valeur de référence pour générer les données de comptage.

2. Calorimètre à télécomptage selon la revendication 1, dans lequel l'unité de commande (150) génère des premières données de comptage lorsqu'il est déterminé que la défaillance n'est pas survenue et génère des deuxièmes données de comptage incluant en outre un champ de données plus grand que celui des premières données de comptage lorsqu'il est déterminé que la défaillance est survenue, en fonction du résultat déterminé reçu en provenance de l'unité de détermination de défaillance (140).

3. Calorimètre à télécomptage selon la revendication 2, dans lequel l'unité de commande (150) calcule respectivement une valeur intégrée de calories et une valeur instantanée de calories sur la base de la valeur calculée reçue en provenance de l'unité de calcul de calories (130).

4. Calorimètre à télécomptage selon la revendication 3, dans lequel les premières données de comptage incluent la valeur intégrée de calories et les deuxièmes données de comptage incluent au moins une valeur de la valeur instantanée de calories, de la valeur mesurée de température de la canalisation de côté d'alimentation, d'une valeur mesurée de température de la canalisation de côté de récupération, et de la valeur mesurée de débit, et la valeur intégrée de calories.

5. Calorimètre à télécomptage selon l'une quelconque des revendications 2 à 4, dans lequel l'unité de commande (150) génère les deuxièmes données de comptage incluant un drapeau de défaillance pour indiquer que la défaillance est survenue.

6. Calorimètre à télécomptage selon l'une quelconque des revendications 2 à 5, dans lequel l'unité de commande (150) commande une période au cours de laquelle les premières données de comptage sont transmises au serveur et une période au cours de laquelle les deuxièmes données de comptage sont transmises au serveur pour qu'elles soient différentes l'une de l'autre, en fonction du résultat déterminé reçu en provenance de l'unité de détermination de défaillance (140).

7. Calorimètre à télécomptage selon l'une quelconque des revendications 1 à 6, dans lequel l'unité de détermination de défaillance (140) détermine que la défaillance est survenue dans le cas dans lequel il est déterminé que la valeur mesurée de débit reçue en provenance de l'unité de mesure de débit (110) est incluse dans une plage de détermination de débit prédéterminée et la valeur de différence de température reçue en provenance de l'unité de mesure de température (120) s'écarte d'une plage de détermination de température prédéterminée.

8. Calorimètre à télécomptage selon l'une quelconque des revendications 1 à 7, dans lequel la température d'alimentation de la canalisation qui est proche de la canalisation de côté d'alimentation (30) est l'une d'une température d'alimentation dans une salle de machines, d'une température d'alimentation dans une colonne, d'une température d'alimentation dans des foyers adjacents au même étage, et d'une température d'alimentation dans des foyers adjacents au-dessus et au-dessous.

9. Calorimètre à télécomptage selon l'une quelconque des revendications 1 à 8, dans lequel l'unité de détermination de défaillance (140) détermine que la défaillance est survenue, lorsque la valeur de différence de température reçue en provenance de l'unité de mesure de température (120) s'écarte d'une plage prédéterminée.

10. Calorimètre à télécomptage selon la revendication 9, dans lequel l'unité de commande (150) reçoit une valeur de référence incluant la température d'alimentation de la canalisation qui est proche de la canalisation de côté d'alimentation (30) et une température de récupération de la canalisation qui est proche de la canalisation de côté de récupération (40) et compare la valeur de référence à la valeur mesurée de température pour la canalisation de côté d'alimentation (30) et la valeur mesurée de température pour la canalisation de côté de récupération (40) pour déterminer la valeur mesurée de température à laquelle la défaillance est survenue.

11. Procédé de fonctionnement d'un calorimètre à télécomptage (100), le procédé de fonctionnement comprenant les étapes de :
une étape de mesure de fluide (S100) pour mesurer une quantité de fluide fourni par l'intermédiaire d'une canalisation ;
une étape de mesure de différence de température (S110) pour mesurer une différence de température entre une canalisation de côté d'alimentation (30) et une canalisation de côté de récupération (40) ;
une étape de calcul de calories (S120) pour calculer une valeur de calories fournies par l'intermédiaire de la canalisation en utilisant la valeur de débit mesurée et la valeur de différence de température entre la canalisation de côté d'alimentation (30) et la canalisation de côté de récupération (40) ;
une étape de détermination de défaillance (S130) pour déterminer, sur la base de la valeur de différence de température et de la valeur de débit mesurée, si une défaillance est survenue ; et
une étape de transmission de données de comptage (S160) pour transmettre les premières données de comptage à un serveur (200), lorsqu'il est déterminé qu'une défaillance n'est pas survenue, et pour transmettre des deuxièmes données de comptage, qui sont différentes des premières données de comptage, au serveur (200), lorsqu'il est déterminé qu'une défaillance est survenue, en fonction du résultat déterminé de l'étape de détermination de défaillance,
le procédé étant **caractérisé en ce que**
lorsqu'il est déterminé qu'une défaillance est survenue dans la mesure de température pour la canalisation de côté d'alimentation, le serveur (200) transmet, au calorimètre à télécomptage (100), une température d'alimentation d'une canalisation qui est proche de la canalisation de côté d'alimentation en tant qu'une valeur de référence et ledit calorimètre (100) corrige la valeur de calories par l'utilisation de la valeur de référence pour générer les données de comptage.

12. Procédé de fonctionnement d'un calorimètre à télécomptage selon la revendication 11, dans lequel lesdites deuxièmes données de comptage incluent un champ de données plus grand que celui des premières données de comptage lorsqu'il est déterminé que la défaillance est survenue, en fonction du résultat déterminé de l'étape de détermination de défaillance.

13. Procédé de fonctionnement d'un calorimètre à télécomptage selon la revendication 11 ou 12, dans lequel la température d'alimentation de la canalisation qui est proche de la canalisation de côté d'alimentation (30) est l'une d'une température d'alimentation dans une salle de machines, d'une température d'alimentation dans une colonne, d'une température d'alimentation dans des foyers adjacents au même étage, et d'une température d'alimentation dans des foyers adjacents au-dessus et au-dessous.

14. Procédé de fonctionnement d'un calorimètre à télécomptage selon l'une quelconque des revendications 11 à 13, dans lequel il est déterminé que la défaillance est survenue dans le cas dans lequel il est déterminé que la valeur de débit mesurée est incluse dans une plage de détermination de débit prédéterminée et la valeur de différence de température s'écarte d'une plage de détermination de température prédéterminée.

15. Procédé de fonctionnement d'un calorimètre à télécomptage selon l'une quelconque des revendications 11 à 14, dans lequel il est déterminé qu'une défaillance est survenue, lorsque la valeur de différence de température s'écarte d'une plage prédéterminée.
